(19) Europäisches Patentamt / European Patent Office / Office européen des brevets

(11) **EP 2 511 137 B1**

(12) **EUROPEAN PATENT SPECIFICATION**

(45) Date of publication and mention
of the grant of the patent:
**27.03.2019 Bulletin 2019/13**

(51) Int Cl.:
*G06K 9/00* (2006.01)  *G06T 3/40* (2006.01)
*G08G 1/16* (2006.01)  *B60R 1/00* (2006.01)

(21) Application number: **11162470.6**

(22) Date of filing: **14.04.2011**

(54) **Vehicle Surround View System**

Fahrzeug-Surround-Blicksystem

Système de visualisation panoramique de véhicule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.10.2012 Bulletin 2012/42**

(73) Proprietor: **Harman Becker Automotive Systems
GmbH
76307 Karlsbad (DE)**

(72) Inventors:
• **Scholl, Kay-Ulrich**
  **76307, Karlsbad (DE)**
• **Hübner, Klaus**
  **75181, Pforzheim (DE)**
• **Quast, Johannes**
  **76133, Karlsruhe (DE)**
• **Natroshvili, Koba**
  **76337, Waldbronn (DE)**

(74) Representative: **Bertsch, Florian Oliver
Kraus & Weisert
Patentanwälte PartGmbB
Thomas-Wimmer-Ring 15
80539 München (DE)**

(56) References cited:
**EP-A1- 1 115 250**    **EP-A1- 2 192 552**
**EP-A1- 2 234 399**    **EP-A1- 2 285 109**

• **Yu-Chih Liu, Kai-Ying Lin, Yong-Sheng Chen:
"Bird's-Eye View Vision System for Vehicle
Surrounding Monitoring" In: "Robot Vision", 1
January 2008 (2008-01-01), Springer Berlin
Heidelberg, Berlin, Heidelberg, XP55004046,
ISBN: 978-3-54-078157-8 pages 207-218, * the
whole document ***
• **YI-YUAN CHEN ET AL: "An embedded system for
vehicle surrounding monitoring", POWER
ELECTRONICS AND INTELLIGENT
TRANSPORTATION SYSTEM (PEITS), 2009 2ND
INTERNATIONAL CONFERENCE ON, IEEE,
PISCATAWAY, NJ, USA, 19 December 2009
(2009-12-19), pages 92-95, XP031624185, DOI:
DOI:10.1109/PEITS.2009.5406797 ISBN:
978-1-4244-4544-8**

## Description

The invention relates to a vehicle surround view system and to a method for generating a surround view of a vehicle.

Related Art

In recent years the use of image sensors in vehicles is proliferating. Often these cameras are used in a driver assist system in which the image sensors track the vehicle environment, identify objects and warn the driver of possible dangerous driving situations or may even actively control the driving by actuating the break etc. Furthermore, image sensors are used as rear-view cameras which help the driver with parking the vehicle. More advanced systems use several image sensors in a vehicle to generate different views of the surroundings of the vehicle. Furthermore, ultrasound sensors are used which help to determine the distance to an object, these sensors mainly being provided in the rear part of the vehicle to assist in parking situations. However, these ultrasound sensors can provide wrong results in snow conditions. Furthermore, many accidents happen because of the blind spot problem i.e. in a situation where a driver intends to change a lane but fails to see another vehicle located in the blind zone of the side view mirror.

Additionally, it was observed that vehicles equipped with rear-vision systems have caused near accidents as the view provided by the image sensors of the rear part of the vehicle suggests that drivers have more space than in reality.

Summary

Accordingly a need exists to provide a surround view of the vehicle covering the complete surroundings of the vehicle which provides a realistic impression of the view of the surroundings to the user.

This need is met by the features of the independent claims. In the dependent claims preferred embodiments of the invention are described.

According to a first aspect of the invention, a vehicle surround view system is provided comprising a plurality of image sensors provided at different locations of the vehicle, the image sensors generating image data of the vehicle surroundings that cover the complete surroundings of the vehicle. Furthermore, an image processing unit is provided processing the image data of the plurality of image sensors, the image processing unit being configured to generate the surround view of the vehicle based on the image data of the different image sensors. The image processing unit projects the image data inversely on a bowl surrounding the vehicle. The bowl has a flat bottom with a substantially rectangular shape, the bowl continuing above the bottom in horizontal slices with the top slice of the bowl being substantially ellipsoidal in shape. Furthermore, a display is provided displaying the surround view generated by the image processing unit. Furthermore, a manipulator is provided changing a position and an angle of view with which the generated surround view is displayed. The surround view helps the driver to obtain an overview of the vehicle surroundings. With the manipulator the driver or any other user can freely select the position and the angle of view with which the vehicle surroundings are displayed. Any obstacles situated in the vicinity can be detected easily. The surround view may be especially used in assisting the driver when parking the vehicle. Furthermore, the vehicle surround view system can help to avoid obstacles in the blind spot. The special form of the bowl helps to generate a realistic surround view. The overview of the vehicle surroundings is obtained without the need for the driver to turn the head.

One possible implementation of the image sensors are fish-eye cameras having a horizontal opening angle of more than 170°, preferably 175° or more. Preferably four fish-eye cameras are used located in the four side surfaces of the vehicle one camera on the left side of the vehicle, another on the right side, a third camera on the rear and a fourth camera on the front of the vehicle. The image processing unit combines the image data generated by the different cameras and generates the surround view covering the complete surroundings of the vehicle. With complete surroundings it should be understood that the cameras may not detect the space directly above the vehicle or below the vehicle, but the image sensors cover the complete side surroundings of the vehicle.

The flat bottom of the bowl, having the substantially rectangular shape, may be shaped such that the ratio of the long edge to the short edge of the rectangular shape is proportional to the ratio of the vehicle length to the vehicle width. When the ratio of the long edge to the short edge is proportional to the ratio of the vehicle length to the vehicle width a realistic representation of the image data can be obtained. In this context it is further possible that the ratio of the long axis to a short axis of the substantially ellipsoidal shape is proportional to the ratio of the vehicle length to the vehicle width as well.

Preferably this shape of the bowl changes from the top to the bottom of the bowl gradually from the ellipsoidal shape of the slices to the rectangular shape of the slices, the rectangular shape having curved corners. The curved corners may be designed such that the corners of the rectangular shaped slice are replaced by an ellipsoidal shape An example of such a projection surfaces is dislclosed in e.g. EP 1 115 250 A1 (MATSUSHITA ELECTRIC IND CO LTD [JP] PANASONIC CORP [JP]) 11 July 2001 (2001-07-11).

According to another embodiment, a section of the slices having an ellipsoidal shape increases linearly from the bottom to the top of the bowl. Thus, when moving from the top of the bowl to the bottom of the bowl, the part in the slices having an ellipsoidal shape increases linearly, at the same time the part of the slice having a rectangular shape decreases by the same amount. The bottom of the bowl is defined as the part of the bowl which is flat and which touches the ground.

As far as the vertical cross section of the bowl is concerned, the vertical cross section can also have an ellipsoidal shape with the exception of the bottom as the bottom is flat. Preferably, as far as the vertical cross section of the bowl is concerned, the vertical cross section can have a line on the bottom of the bowl followed by the ellipsoidally shaped vertical cross section. The derivatives at the connection of the line with the ellipsoidally shaped vertical cross section should be the same in order to obtain a smooth connection at the connecting point between the line and the ellipsoidal vertical cross section. The derivatives both may have the value of zero at this point.

In one embodiment, the bowl is shaped such that, in the slice where the bowl touches the bottom of the bowl, a ratio of the section having an ellipsoidal shape to the overall length of said slice is between 0,6 and 0,8, preferably between 0,65 and 0,75 and is more preferably approximately 0,7. On the ground plane itself, the bottom of the bowl, the ratio can again be reduced linearly so that the section having an ellipsoidal shape to the overall length of the slice is reduced to about 1%. This curved rectangle may already have a surface a bit smaller than the vehicle volume.

The shape of the bowl can be changed. By way of example, the image processing unit can change the size of the bottom of the bowl and this change of the bottom may be achieved with the manipulator of the vehicle surround view system operated by the user of the surround view system. Especially in a parking application it may be beneficial to increase the size of the bottom of the bowl. In a parking situation it may be helpful that all of the objects located on the ground are displayed at a correct location with little distortion. When an object is located on the ground and when the bowl has a flat bottom, the objects are correctly visualized. Thus, a good visual perception is obtained for the objects located on the ground.

The vehicle surround view system may furthermore contain an interface via which distance information of objects located in the vehicle surroundings is received. The image processing unit can then use the received information to correct a position of objects shown in the surround view of the vehicle. By way of example, the vehicle surround view system may receive distance information from a 3D sensor such as a PMD sensor which provides distance information of the objects located in the image plane of the PMD sensor. The image processing unit can then correctly place the object in the surround view image data.

In another embodiment, the image processing unit can determine the distance of an object shown in the surround view without the distance information provided by other sensors. By way of example, the distance of an object shown in the surround view can be determined based on the movement of the object in the surround view of the vehicle when the vehicle is moving. When the vehicle is moving the surround view and the objects are moving generating an optical flow of objects. The greater the distance of the object to the vehicle is, the smaller the velocity of the moving object in the surround view is. Based on the velocity of a moving object the distance can be estimated e.g. by comparing the object velocity to a table containing predefined sets of object velocities and the corresponding distances of the object.

The invention furthermore relates to a method for generating the surround view in which the image data of the plurality of sensors are processed as mentioned above and displayed to a user the user can then change the postion and angle of view with which the generated surround view is displayed in accordance with a user input. The user can thus have an overview of the complete vehicle surroundings without rotating the head.

Brief Description of the Drawings

The invention will be described in further detail with reference to the accompanying drawings, in which

Fig. 1 shows a schematic view of a vehicle surround view system incorporated into a vehicle,
Fig. 2 shows a schematic view of the vehicle with four cameras and the relation to the bowl surrounding the vehicle,
Fig. 3 shows two different slices of the bowl shown in Fig. 2,
Fig. 4 shows a bird's eye view of the vehicle surroundings generated with the system shown in Fig. 1, and

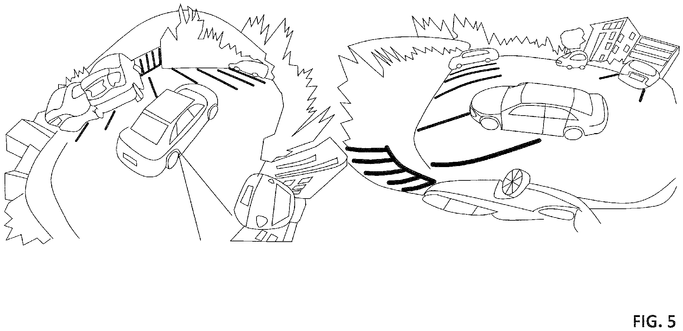

Fig. 5 shows another surround view using another angle of view generated by the system shown in Fig. 1.

Detailed description

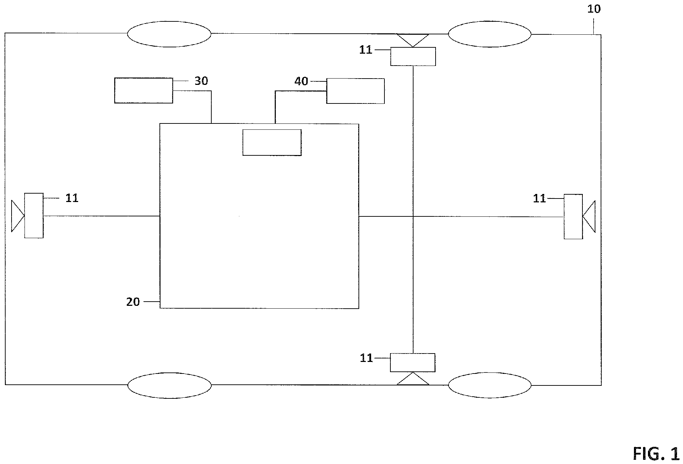

In Fig. 1 a vehicle 10 is shown in which four fish-eye cameras 11 are incorporated. The image sensors or cameras are fish-eye cameras which are placed in the perimeter of the vehicle symmetrically in such a way that they cover the complete surrounding perimeter. By way of example, the side cameras may be provided in the left and right door mirrors. The rear and the front cameras may be located in different locations depending on the type of the vehicle. The vehicle surround view system furthermore comprises an image processing unit 20 that receives the image data generated by the different cameras and which fuses the image data in such a way that a surround view is generated. More specifically, the cameras can have fish-eye lenses which are wide-angle lenses. As already known, these fish-eye lenses generate distorted images of the surroundings. The image processing unit combines the different images in such a way that a surround view image is generated that can be displayed on a display 30. Furthermore, a manipulator 40 can be provided with which the position and the angle of view can be changed. With the surround view system a view can be generated of the vehicle surroundings corresponding to a virtual user located somewhere in the vehicle surroundings. By way of example, one possible position of the virtual user is above the vehicle to generate a bird's eye view in which the vehicle surroundings are seen from above the vehicle. The processing unit can contain a first interface 21 via which signals from the manipulator are received and with which the processing unit receives the detailed information indicating from which position and angle of view the surround view should be generated. The processing unit 20 can further comprise a second interface 22 via which signals from other sensors may be received, e.g. signals from sensors measuring the distance to objects located in the vehicle surroundings, e.g. a PMD sensor, an ultrasound sensor, a radar sensor etc.

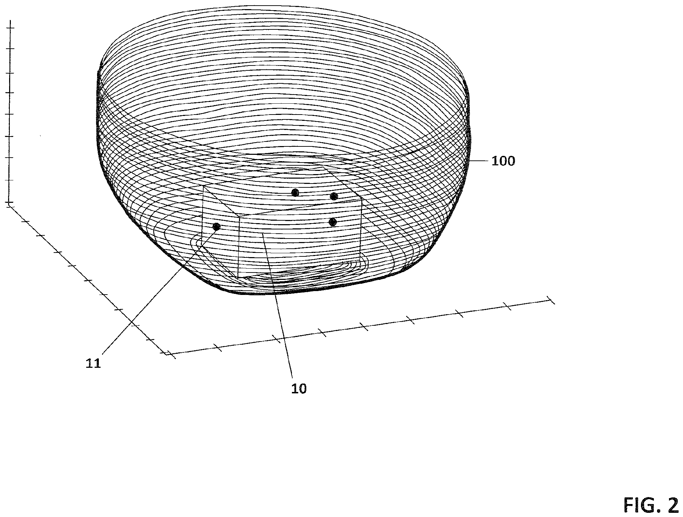

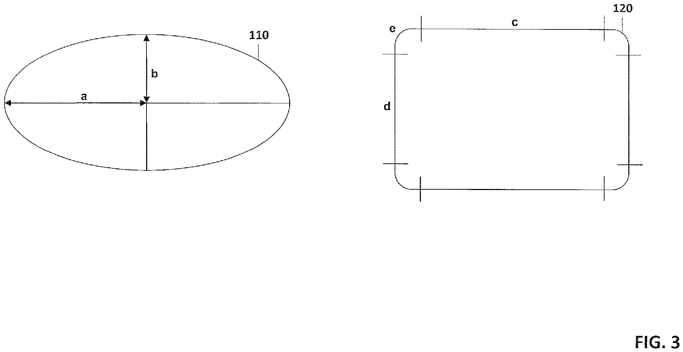

In connection with Fig. 2 the generation of the surround view is explained in more detail. The image data generated by the different cameras 11 are fused and inversely projected onto a bowl 100 which surrounds the vehicle 10. The vehicle is located on the bottom or ground floor of the bowl. In the generated surround view the shape of the bowl is important for the displayed surround view. As the vehicle has a rectangular form and is not quadratic the bowl's shape is stretched along the vehicle axis as can be seen from Fig. 2. The bowl is constituted of different horizontal slices. The horizontal slices have an ellipsoidal shape and the ratio of the major axis to the minor axis is proportional to the ratio of the vehicle length to width. The top slice can have a purely ellipsoidal shape as shown on the left part of Fig. 3, where a top slice 110 of the bowl is schematically shown with the long axis a and the short axis b. The shape of the slices gradually changes from the ellipsoidal shape to a curved rectangle shown in the right part of Fig. 3 where the bottom of the bowl is shown having the smallest circumference. Points on the bowl located between two slices are interpolated using the positions of points located on two neighbouring slices. This smallest slice having a surface that can be a bit smaller than the vehicle surface can be designed such that the sections c and d of the smallest slice, where the slice has a rectangular shape, represent 99% of the whole circumference. Only the edges of the slice 120 may be curved and may be ellipsoidal in shape. The bottom of the bowl has additional increased slices and in the last slice that touches the bottom. The part of the overall length having an ellipsoidal shape may be around 70%. The following parameter A is the main parameter of the horizontal slices and is defined as follows

$$A = \frac{\text{ellipsoidal part} - \text{rectangular part}}{\text{overall length of the disc}}$$

The ellipsoidal part is the length of the curved part of a slice, the rectangular part being the linear part of the slice. A can be one in the top slice of the bowl, meaning that the shape is purely ellipsoidal. When one moves down the parallel horizontal slices, the parameter A can be linearly reduced until the bowl touches the ground plane where A can be around 0,7 as mentioned above. On the ground plane the ratio can be further linearly reduced to a minimum of about 0,01. With reference to Fig. 3 this would mean that the section e would only constitute 1% of the overall length of slice 120. As can be deduced from the above, the bottom of the bowl having the flat surface is larger in surface than the vehicle surface.

The vertical cut of the bowl again provides an ellipsoidal shape except on the ground plane where it is a simple line. The derivative of the ellipse at the connection with the line is 0° and thus corresponds to the derivative of the line at this point. This allows a smooth connection between the ellipsoidal side surfaces and the ground plane. This smooth connection is helpful for generating a good visual perception of objects which are projected to a part of the bowl where the bowl touches the ground.

The points located in the vehicle surroundings directly on the bowl shown in Fig. 2 are correctly visualized in the surround view generated by the image processing unit. Points located outside or inside the bowl are displayed with a distortion, nevertheless, the special shape of the bowl provides a perfect visual perception for the user. On the bowl bottom points are projected on the ground plane. This has the effect that all points which are located on the ground plane, like road markings, will be correctly mapped. Furthermore, the bottom of the bowl, which is a curved rectangle, matches the form of the vehicle, which is also a rectangle. The complete bowl has the form of a scratched sphere. This sphere is the most natural form and when the position or angle of view by the virtual user somewhere in the space of the vehicle surroundings changes the position, a smooth change of the vehicle surround view is obtained. Furthermore, the ellipsoidal shape of the vertical cross section guarantees a smooth junction of the bowl with the bottom which again improves the visual perception for the user.

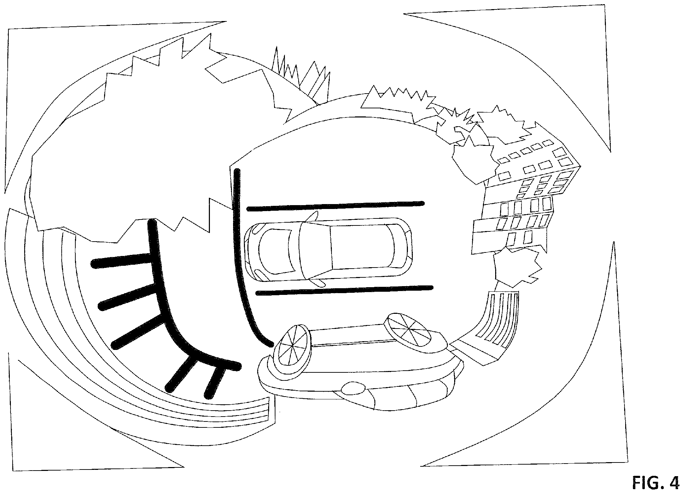

In Fig. 4 a bird's eye view as an example of a surround view is shown. As can be seen, the points located on the floor are correctly located on the floor of the surround view image. Furthermore, the user can dynamically change the shape of the projection bowl during use. This will allow the driver to flexibly react to different examples where the surround view is needed. By way of example, it is possible to make the bowl bottom larger which means that more image pixels of the surround view are projected to the image plane and a bigger part of the ground floor around the vehicle will be visible.

The surround view can also be applied during driving, e.g. on highways. The driver can observe the lane markings and neighbouring objects without the need to rotate the head and without the need to look into the side mirrors. The surround view can thus be used to keep a predefined lane, to change a lane during overtaking or when entering or exiting a highway. In all these applications a good overview of the neighbouring objects is helpful to avoid overlooking objects.

Additionally, it is possible to combine the vehicle surround view system with other sensors. If no further image processing is carried out the real distance of the displayed object is not known. Thus, only points which are really located on the bowl are correctly projected. If the distance to other objects were known, corrections could be performed in the mapping function used to map the displayed objects on the bowl and the visual perception could be improved. As sensors measuring the distance to the objects, a radar sensor, a PMD sensor or an ultrasonic sensor may be used.

When the vehicle is moving and when at the same time the surround view is displayed, an optical flow is generated. This optical flow could be used to estimate the distance of the objects. Thus, in this embodiment, it is possible to determine the object distances or object positions using only the surround view generated by the image processing unit without the need of extra sensors. This determination of the distances in the case of the moving vehicle can further improve the displayed surround view.

**Claims**

1. A vehicle surround view system comprising:

    - a plurality of image sensors (11) provided at different locations of the vehicle (10), the image sensors (11) generating image data of the vehicle surroundings that cover the complete surroundings of the vehicle,
    - an image processing unit (20) processing the image data of the plurality of image sensors (11), the image processing unit (20) being configured to generate the surround view of the vehicle based on the image data of the different image sensors (11), wherein the image processing unit (20), for generating the surround view, projects the image data inversely on a bowl (100) surrounding the vehicle,
    - a display displaying the surround view generated by the image processing unit,
    - a manipulator (40) changing a position and an angle of view with which the generated surround view is displayed, **characterized in that** the bowl has a flat bottom with a substantially rectangular shape, the bowl continuing above the bottom in horizontal slices, the top slice of the bowl being substantially ellipsoidal in shape, wherein the shape of the bowl (100) changes from the top to the bottom of the bowl gradually from an ellipsoidal shape of the slices to a rectangular shape of the slices having curved corners, wherein the shape of the bowl (100) changes from the top to the bottom from an ellipsoidal shape of the slices to a rectangular shape of the slices the corners of which were replaced by the ellipsoidal shape, wherein in a slice where the bowl touches the bottom of the bowl a ratio of the section having an ellipsoidal shape to the overall length of said slice is between 0,6 and 0,8, preferably between 0,65 and 0,75 and more preferably 0,7, wherein the image processing unit (20) is configured to change the size of the bottom of the bowl.

2. The vehicle surround view system according to claim 1, wherein the ratio of a long edge to a short edge of the rectangular shape is proportional to the ratio of the vehicle length to the vehicle width.

3. The vehicle surround view system according to claim 1 or 2, wherein the ratio of a long axis to a short axis of the substantially ellipsoidal shape is proportional to the ratio of the vehicle length to the vehicle width.

4. The vehicle surround view system according to any one of the preceding claims, wherein a section of the slices having an ellipsoidal shape increases linearly from the bottom to the top of the bowl (100).

5. The vehicle surround view system according to any one of the preceding claims wherein, with the exception of the bottom, the vertical cross section of the bowl is ellipsoidal in shape.

6. The vehicle surround view system according to claim 5, wherein the vertical cross section of the bowl (100) comprises a line on the bottom of the bowl, followed by the ellipsoidally shaped vertical cross section, a gradient at the connection of the line with the ellipsoidally shaped vertical cross section being between 80 and 100°, preferably around 90°.

7. The vehicle surround view system according to any one of the preceding claims, further comprising an interface (22) via which a distance information of objects located in the vehicle surroundings is received, the image processing unit (20) using the received distance information to correct a position of an object shown in the surround view of the vehicle.

8. The vehicle surround view system according to any one of the preceding claims, wherein the image processing unit (20) is configured to determine a distance of an object shown in the surround view of the vehicle relative to the vehicle based on the movement of the object in the surround view of the vehicle when the vehicle is moving.

9. The vehicle surround view system according to any one of the preceding claims, wherein the image sensors (11) are fish-eye cameras having a horizontal opening angle of more than 170°.

10. A method for generating a surround view of a vehicle using a plurality of image sensors provided at different locations of the vehicle, the image sensors generating image data of the vehicle surroundings that cover the complete surroundings of the vehicle, the method comprising the steps of

- processing the image data of the plurality of image sensors to generate the surround view of the vehicle based on the image data of the different image sensors, wherein the image data are inversely projected on a bowl surrounding the vehicle, the bowl having a flat bottom with a substantially rectangular shape, the bowl continuing above the bottom with horizontal slices, the top slice of the bowl being substantially ellipsoidal in shape, wherein the shape of the bowl (100) changes from the top to the bottom of the bowl gradually from an ellipsoidal shape of the slices to a rectangular shape of the slices having curved corners, wherein the shape of the bowl (100) changes from the top to the bottom from an ellipsoidal shape of the slices to a rectangular shape of the slices the corners of which were replaced by the ellipsoidal shape, wherein in a slice where the bowl touches the bottom of the bowl a ratio of the section having an ellipsoidal shape to the overall length of said slice is between 0,6 and 0,8, preferably between 0,65 and 0,75 and more preferably 0,7,
- displaying the surround view generated by the image processing unit,
- changing a position and an angle of view with which the generated surround view is displayed and the size of the bottom of the bowl in accordance with a user input.

**Patentansprüche**

1. Fahrzeugrundumsichtsystem, umfassend:

- eine Vielzahl von Bildsensoren (11), die an unterschiedlichen Stellen des Fahrzeugs (10) bereitgestellt sind, wobei die Bildsensoren (11) Bilddaten der Fahrzeugumgebung erzeugen, die die vollständige Umgebung des Fahrzeugs abdecken,
- eine Bildverarbeitungseinheit (20), die die Bilddaten der Vielzahl von Bildsensoren (11) verarbeitet, wobei die Bildverarbeitungseinheit (20) dazu konfiguriert ist, die Rundumsicht des Fahrzeugs auf Grundlage der Bilddaten der unterschiedlichen Bildsensoren (11) zu erzeugen, wobei die Bildverarbeitungseinheit (20) zum Erzeugen der Rundumsicht die Bilddaten umgekehrt auf einer Schüssel (100), die das Fahrzeug umgibt, projiziert,
- eine Anzeige, die die durch die Bildverarbeitungseinheit erzeugte Rundumsicht anzeigt,
- einen Manipulator (40), der eine Position und einen Sichtwinkel, mit denen die erzeugte Rundumsicht angezeigt wird, ändert, **dadurch gekennzeichnet, dass** die Schüssel einen flachen Boden mit einer im Wesentlichen rechteckigen Form aufweist, wobei sich die Schüssel über dem Boden in horizontalen Scheiben fortsetzt, wobei die obere Scheibe der Schüssel im Wesentlichen ellipsenförmig ist, wobei sich die Form der Schüssel (100) von der Oberseite zum Boden der Schüssel schrittweise von einer ellipsenförmigen Form der Scheiben zu einer rechteckigen Form der Scheiben mit gebogenen Ecken ändert, wobei sich die Form der Schüssel (100) von der Oberseite zum Boden von einer ellipsenförmigen Form der Scheiben zu einer rechteckigen Form der Scheiben, deren Ecken durch die ellipsenförmige Form ersetzt wurden, ändert, wobei bei einer Scheibe, bei der die Schüssel den Boden der Schüssel berührt, ein Verhältnis des Abschnitts mit einer ellipsenförmigen Form zu der Gesamtlänge der Scheibe zwischen 0,6 und 0,8, bevorzugt zwischen 0,65 und 0,75 und bevorzugter 0,7 beträgt, wobei die Bildverarbeitungseinheit (20) dazu konfiguriert ist, die Größe des Bodens der Schüssel zu ändern.

2. Fahrzeugrundumsichtsystem nach Anspruch 1, wobei das Verhältnis einer langen Kante zu einer kurzen Kante der rechteckigen Form proportional zu dem Verhältnis der Fahrzeuglänge zu der Fahrzeugbreite ist.

3. Fahrzeugrundumsichtsystem nach Anspruch 1 oder 2, wobei das Verhältnis einer langen Achse zu einer kurzen Achse der im Wesentlichen ellipsenförmigen Form proportional zu dem Verhältnis der Fahrzeuglänge zu der Fahrzeugbreite ist.

4. Fahrzeugrundumsichtsystem nach einem der vorhergehenden Ansprüche, wobei ein Abschnitt der Scheiben mit einer ellipsenförmigen Form linear vom Boden zu der Oberseite der Schüssel (100) zunimmt.

5. Fahrzeugrundumsichtsystem nach einem der vorhergehenden Ansprüche, wobei, mit Ausnahme des Bodens, der vertikale Querschnitt der Schüssel ellipsenförmig ist.

**6.** Fahrzeugrundumsichtsystem nach Anspruch 5, wobei der vertikale Querschnitt der Schüssel (100) eine Linie am Boden der Schüssel umfasst, gefolgt von dem ellipsenförmigen vertikalen Querschnitt, wobei eine Neigung an der Verbindung der Linie mit dem ellipsenförmigen Querschnitt zwischen 80 und 100°, bevorzugt etwa 90°, beträgt.

**7.** Fahrzeugrundumsichtsystem nach einem der vorhergehenden Ansprüche, ferner umfassend eine Schnittstelle (22), über die Abstandsinformationen von Objekten, die sich in der Fahrzeugumgebung befinden, empfangen werden, wobei die Bildverarbeitungseinheit (20) die empfangenen Abstandsinformationen dazu verwendet, eine Position eines Objekts, das in der Rundumsicht des Fahrzeugs gezeigt ist, zu korrigieren.

**8.** Fahrzeugrundumsichtsystem nach einem der vorhergehenden Ansprüche, wobei die Bildverarbeitungseinheit (20) dazu konfiguriert ist, einen Abstand eines Objekts, das in der Rundumsicht des Fahrzeugs gezeigt ist, relativ zu dem Fahrzeug auf Grundlage der Bewegung des Objekts in der Rundumsicht des Fahrzeugs zu bestimmen, wenn sich das Fahrzeug bewegt.

**9.** Fahrzeugrundumsichtsystem nach einem der vorhergehenden Ansprüche, wobei die Bildsensoren (11) Fischaugenkameras mit einem horizontalen Öffnungswinkel von mehr als 170° sind.

**10.** Verfahren zum Erzeugen einer Rundumsicht eines Fahrzeugs unter Verwendung einer Vielzahl von Bildsensoren, die an unterschiedlichen Stellen des Fahrzeugs bereitgestellt sind, wobei die Bildsensoren Bilddaten der Fahrzeugumgebung erzeugen, die die vollständige Umgebung des Fahrzeugs abdecken, wobei das Verfahren die folgenden Schritte umfasst:

- Verarbeiten der Bilddaten der Vielzahl von Bildsensoren, um die Rundumsicht des Fahrzeugs auf Grundlage der Bilddaten der unterschiedlichen Bildsensoren zu erzeugen, wobei die Bilddaten umgekehrt auf einer Schüssel, die das Fahrzeug umgibt, projiziert sind, wobei die Schüssel einen flachen Boden mit einer im Wesentlichen rechteckigen Form aufweist, wobei sich die Schüssel über dem Boden mit horizontalen Scheiben fortsetzt, wobei die obere Scheibe der Schüssel im Wesentlichen ellipsenförmig ist, wobei sich die Form der Schüssel (100) von der Oberseite zum Boden der Schüssel schrittweise von einer ellipsenförmigen Form der Scheiben zu einer rechteckigen Form der Scheiben mit gebogenen Ecken ändert, wobei sich die Form der Schüssel (100) von der Oberseite zum Boden von einer ellipsenförmigen Form der Scheiben zu einer rechteckigen Form der Scheiben, deren Ecken durch die ellipsenförmige Form ersetzt wurden, ändert, wobei bei einer Scheibe, bei der die Schüssel den Boden der Schüssel berührt, ein Verhältnis des Abschnitts mit einer ellipsenförmigen Form zu der Gesamtlänge der Scheibe zwischen 0,6 und 0,8, bevorzugt zwischen 0,65 und 0,75 und bevorzugter 0,7 beträgt,
- Anzeigen der durch die Bildverarbeitungseinheit erzeugten Rundumsicht,
- Ändern einer Position und eines Sichtwinkels, mit denen die erzeugte Rundumsicht angezeigt wird, und der Größe des Bodens der Schüssel gemäß einer Benutzereingabe.

## Revendications

**1.** Système de visualisation panoramique de véhicule, comprenant :

- une pluralité de capteurs d'image (11) prévus à différents emplacements du véhicule (10), les capteurs d'image (11) générant des données d'image des environs du véhicule couvrant tout l'environnement du véhicule,
- une unité de traitement d'image (20) traitant les données d'image de la pluralité de capteurs d'image (11), l'unité de traitement d'image (20) étant configurée pour générer la vue panoramique du véhicule sur la base des données d'image des différents capteurs d'image (11), dans lequel l'unité de traitement d'image (20), pour générer la vue panoramique, projette les données d'image inversement sur une cuve (100) entourant le véhicule,
- un écran affichant la vue panoramique générée par l'unité de traitement d'image,
- un manipulateur (40) modifiant une position et un angle de vue avec lesquels la vue panoramique générée est affichée, **caractérisé en ce que** la cuve a un fond plat de forme sensiblement rectangulaire, la cuve s'élevant au-dessus du fond par tranches horizontales, la tranche supérieure de la cuve étant de forme sensiblement ellipsoïdale, dans lequel la forme de la cuve (100) change progressivement de haut en bas de la cuve, passant d'une forme ellipsoïdale des tranches à une forme rectangulaire des tranches à angles incurvés, dans lequel la forme de la cuve (100) passe, de haut en bas, d'une forme ellipsoïdale des tranches à une forme rectangulaire des tranches dont les angles ont été remplacés par la forme ellipsoïdale, dans lequel dans une tranche où la cuve touche le fond de la cuve, un rapport de la section ayant une forme ellipsoïdale sur la longueur totale de ladite tranche est compris entre 0,6 et 0,8, de préférence entre 0,65 et 0,75 et de manière davantage préférée est égal à 0, 7, dans lequel l'unité de traitement d'image (20) est configurée pour changer la taille du fond de la cuve.

2. Système de visualisation panoramique de véhicule selon la revendication 1, dans lequel le rapport d'un bord long sur un bord court de la forme rectangulaire est proportionnel au rapport de la longueur du véhicule sur la largeur du véhicule.

3. Système de visualisation panoramique de véhicule selon la revendication 1 ou 2, dans lequel le rapport d'un axe long sur un axe court de la forme sensiblement ellipsoïdale est proportionnel au rapport de la longueur du véhicule sur la largeur du véhicule.

4. Système de visualisation panoramique de véhicule selon l'une quelconque des revendications précédentes, dans lequel une section des tranches ayant une forme ellipsoïdale augmente linéairement de bas en haut de la cuve (100).

5. Système de visualisation panoramique de véhicule selon l'une quelconque des revendications précédentes, dans lequel, à l'exception du fond, la section en coupe verticale de la cuve est de forme ellipsoïdale.

6. Système de visualisation panoramique de véhicule selon la revendication 5, dans lequel la section en coupe verticale de la cuve (100) comprend une ligne au bas de la cuve, suivie de la section en coupe verticale de forme ellipsoïdale, une inclinaison au niveau du raccord de la ligne avec la section en coupe verticale de forme ellipsoïdale étant comprise entre 80 et 100°, de préférence étant égale à 90° environ.

7. Système de visualisation panoramique de véhicule selon l'une quelconque des revendications précédentes, comprenant en outre une interface (22) par le biais de laquelle des informations de distance sur les objets situés dans l'environnement du véhicule sont reçues, l'unité de traitement d'image (20) utilisant les informations de distance reçues pour corriger une position d'un objet représenté dans la vue panoramique du véhicule.

8. Système de visualisation panoramique de véhicule selon l'une quelconque des revendications précédentes, dans lequel l'unité de traitement d'image (20) est configurée pour déterminer une distance d'un objet représenté dans la vue panoramique du véhicule par rapport au véhicule sur la base du mouvement de l'objet dans la visualisation panoramique du véhicule lorsque celui-ci est en mouvement.

9. Système de visualisation panoramique de véhicule selon l'une quelconque des revendications précédentes, dans lequel les capteurs d'image (11) sont des caméras très grand angle ayant un angle d'ouverture horizontal supérieur à 170°.

10. Procédé de génération d'une vue panoramique d'un véhicule en utilisant une pluralité de capteurs d'image prévus à différents emplacements du véhicule, les capteurs d'image générant des données d'image des environs du véhicule couvrant tout l'environnement du véhicule, le procédé comprenant les étapes :

- de traitement des données d'image de la pluralité de capteurs d'image pour générer la vue panoramique du véhicule sur la base des données d'image des différents capteurs d'image, dans lequel les données d'image sont projetées inversement sur une cuve entourant le véhicule, la cuve ayant un fond plat de forme sensiblement rectangulaire, la cuve s'élevant au-dessus du fond par tranches horizontales, la tranche supérieure de la cuve étant de forme sensiblement ellipsoïdale, dans lequel la forme de la cuve (100) change progressivement de haut en bas de la cuve, passant d'une forme ellipsoïdale des tranches à une forme rectangulaire des tranches à angles incurvés, dans lequel la forme de la cuve (100) passe, de haut en bas, d'une forme ellipsoïdale des tranches à une forme rectangulaire des tranches dont les angles ont été remplacés par la forme ellipsoïdale, dans lequel, dans une tranche où la cuve touche le bas de la cuve, un rapport de la section ayant une forme ellipsoïdale sur la longueur totale de ladite tranche est compris entre 0,6 et 0,8, de préférence entre 0,65 et 0,75 et de manière davantage préférée est égal à 0,7,
- d'affichage de la vue panoramique générée par l'unité de traitement d'image,
- de changement d'une position et d'un angle de vue avec lesquels la vue panoramique générée est affichée, et de la taille du fond de la cuve selon une entrée utilisateur.

FIG. 1

FIG. 2

FIG. 3

FIG. 4

FIG. 5

**EP 2 511 137 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1115250 A1